Europäisches Patentamt

European Patent Office

Office européen des brevets

(19)

(11) Veröffentlichungsnummer : **0 306 864 B1**

## (12) EUROPÄISCHE PATENTSCHRIFT

(45) Veröffentlichungstag der Patentschrift :
**14.08.91 Patentblatt 91/33**

(51) Int. Cl.$^5$ : **A61C 13/00**

(21) Anmeldenummer : **88114420.8**

(22) Anmeldetag : **03.09.88**

(54) **Verfahren zur Herstellung von Zahnersatz und/oder Zahnersatzteilen.**

(30) Priorität : **08.09.87 DE 3730002**

(43) Veröffentlichungstag der Anmeldung :
**15.03.89 Patentblatt 89/11**

(45) Bekanntmachung des Hinweises auf die
Patenterteilung :
**14.08.91 Patentblatt 91/33**

(84) Benannte Vertragsstaaten :
**AT CH DE ES FR GB IT LI NL SE**

(56) Entgegenhaltungen :
**DE-A- 2 019 958**
**FR-A- 2 567 017**

(73) Patentinhaber : **Krupp Medizintechnik GmbH**
**Harkortstr. 65**
**W-4300 Essen 1 (DE)**

(72) Erfinder : **Friedrich, Ronald**
**Monterkampweg 43**
**W-4132 Kamp-Lintfort (DE)**
Erfinder : **Lindigkeit, Jürgen, Dr.-Ing**
**Mozartstrasse 3**
**W-4690 Herne 2 (DE)**

(74) Vertreter : **Vomberg, Friedhelm, Dipl.-Phys.**
**Schulstrasse 8**
**W-5650 Solingen 1 (DE)**

## Beschreibung

Die Erfindung bezieht sich auf ein Verfahren zur Herstellung von Zahnersatz und/oder Zahnersatzteilen nach dem Oberbegriff des Anspruches 1.

Als Alternative zum gießtechnischen Herstellen von Zahnersatz sind abtragende Verfahren seit langem bekannt. Insbesondere zur Herstellung von Kronen und Brücken werden sowohl spanende als auch elektroerosive Verfahren angewendet. So wird beispielsweise in der DE 3544123 A1 die Herstellung von Zahnersatzteilen mittels des Funkenerosionsverfahrens beschrieben. Das Zahnersatzteil wird dabei direkt aus vorher nicht bearbeitetem Vollmaterial, z.B. einem Metallklotz, hergestellt. Je nach Form und Größe des herzustellenden Zahnersatzteils ist hierzu ein erheblicher Materialabtrag und damit ein großer Zeit- und Kostenaufwand erforderlich.

Die FR-A-2567017 beschreibt eine Vorform für die Herstellung von Dentalprothesen, die zum Einspannen in ein Bearbeitungswerkzeug mit einer zusätzlichen Halterung verbunden ist. Um die spanenden oder elektroerosiven Bearbeitungen an der Vorform zu minimieren, soll diese so gewählt werden, daß sie im wesentlichen den Endabmessungen der herzustellenden Zahnersatzteile im wesentlichen entspricht.

Es ist daher Aufgabe der vorliegenden Erfindung, daß aus der FR-A-2567017 bekannte Verfahren dahingehend zu verbessern, daß die Einzelanfertigung kostengünstiger und weiterhin ohne größeren Materialaufwand möglich ist.

Diese Aufgabe wird durch das im Anspruch 1 beschriebene Verfahren gelöst.

Der besondere Vorteil der Erfindung liegt darin, daß der erforderliche Materialabtrag bei der in der zweiten Verfahrensstufe durchzuführenden spanenden oder elektroerosiven Bearbeitung minimiert ist, da die hergestellten Rohlinge in ihrer Form dem herzustellenden Zahnersatz bzw. Zahnersatzteil bereits weitgehend entsprechen. Durch die Verringerung des Materialverlustes und die Verkürzung der Fertigungszeit kann das Zahnersatzteil erheblich kostengünstiger hergestellt werden.

Hierbei geht das Verfahren von einem Stangen-Vollmaterial aus, von dem ein Abschnitt passender Länge abgeschnitten wird, aus dem durch Verformung der Rohling erzeugt wird. Je nach Gebiß- bzw. Zahngröße wird das Stangen-Vollmaterial ausgewählt ; dazu wird nur ein solcher Abschnitt abgetrennt, der in der Länge dem zu fertigenden Zahnersatzteil entspricht. Mit anderen Worten, es wird nur soviel Material verarbeitet, wie — bis auf den geringfügig verbleibenden Restabtrag — später benötigt wird.

Nach der Verformung werden an dem Rohling seine Fixierung in einer Werkstückaufnahme ermöglichende Hilfsvorrichtungen angebracht. Beispielsweise kann der Rohling mit einem auf der Seitenfläche ganz oder teilweise horizontal umlaufenden, gradähnlichen Ansatz versehen werden, der das Formteil in zwei etwa gleich hohe Ober- und Unterteile halbiert. Alternativ hierzu können auch Stifte an dem Rohling angebracht bzw. stehengelassen werden, mittels derer er in die Werkstückaufnahmevorrichtung eingespannt werden kann. Die Hilfsvorrichtungen zur Fixierung des Rohlings in der Werkstückaufnahmevorrichtung können entweder unmittelbar bei der Herstellung des Rohlings oder nachträglich an dem Rohling angebracht werden.

Nach einer weiteren Ausgestaltung der Erfindung besteht das Stangen-Vollmaterial bzw. der Rohling aus hochkorrosionsbeständigem Material. Vorzugsweise werden hierzu hochkorrosionsbeständige Knetlegierungen, beispielsweise Cobalt-, Nickel-, Tital-, Niob- oder Tantallegierungen, reine Metalle, wie z.B. Titan, oder nichtmetallische Werkstoffe, wie Keramik, verwendet. Die hochkorrosionsbeständigen Legierungen bzw. Knetlegierungen, das sind solche Legierungen, die umformbar sind, können durch Gießen, Sintern, Verformung und/oder abtragende Verfahren bzw. Keramik durch Sintern und/oder abtragende Fertigung hergestellt werden. Vorzugsweise wird das Rohling durch Biegen, Pressen, Schmieden und/oder Sintern hergestellt.

Nach einer weiteren Ausgestaltung der Erfindung werden an dem Rohling im Verlauf des Schmiedevorganges als Hilfsvorrichtungen dienende gratähnliche Fixieransätze erzeugt. Alternativ hierzu können Stifte oder Stege als Hilfsvorrichtungen auch angeschweißt werden, insbesondere durch Widerstandsbolzenschweißen. Die Hilfsvorrichtungen selbst müssen nicht aus den genannten Legierungen bestehen, insbesondere können unedle, preiswertere Metalle verwendet werden.

Nach einer konkreten Ausführungsform der Erfindung wird der Rohling aus Stangenabschnitten hergestellt und auf eine Temperatur von 1200°C erwärmt, bevor er so gebogen wird, daß seine Krümmung dem zu fertigenden Zahnersatz bzw. Zahnersatzteil entspricht. Nach dem Biegen wird der Rohling erneut aufgeheizt und durch Heißprägen oder Schmieden weiterhin so verformt, daß er in der Breite, der Höhe und der Oberflächengestalt dem herzustellenden Zahnersatz bzw. Zahnersatzteil weitgehend, d.h. endabmessungsnah, angepaßt ist. Soweit nicht beim Schmieden Gratansätze stehengelassen worden sind, werden durch Widerstandsbolzenschweißen Stifte als Hilfsvorrichtung angeschweißt, bevor der Rohling weichgeglüht und entzundert sowie nach dem Einspannen der Stifte in eine Aufnahmevorrichtung spanend oder elektrosiv zu der endgültigen Form bearbeitet wird.

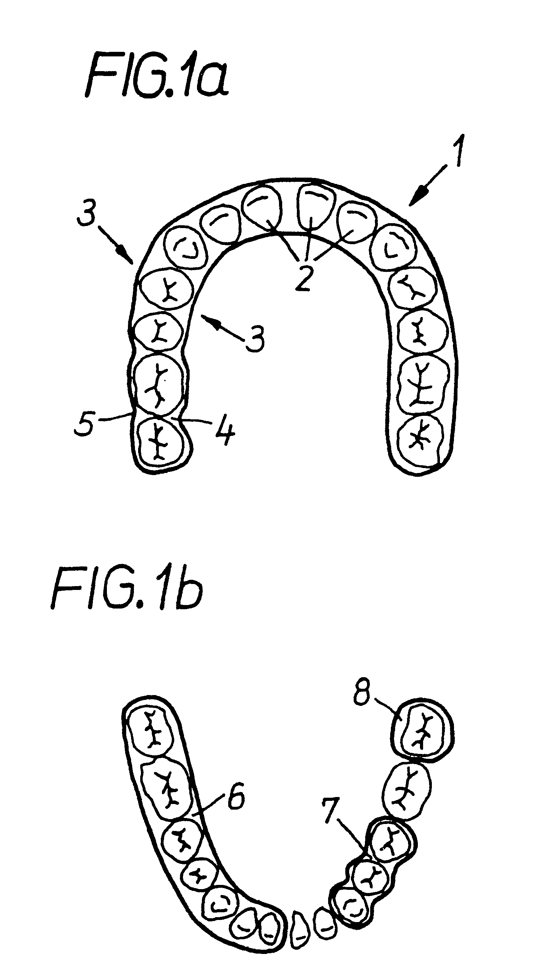

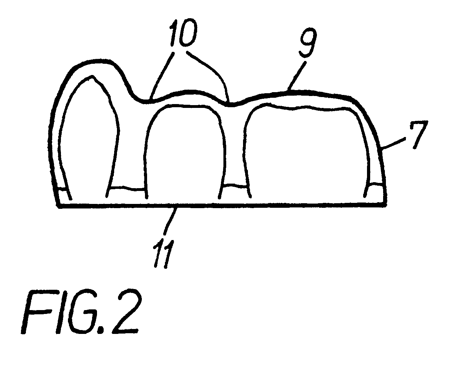

Das erfindungsgemäße Verfahren wird anhand eines Ausführungsbeispieles anhand der Fig. 1 und 2 näher erläutert.

Es zeigen

Fig. 1a    einen Rohling zur Herstellung einer vollständigen Oberkieferprothese in einer Draufsicht,

Fig. 1b    einen Rohling zur Herstellung von Zahnersatzteilen, wie einem halben Zahnbogen, Brücken und Kronen in der Draufsicht und

Fig. 2    einen Rohling entsprechend Fig. 1b in einer Seitenansicht.

Der in Fig. 1a dargestellte Rohling besteht aus einem massiven Formteil 1, das in der Länge, Breite, Höhe und Krümmung dem zu ersetzenden Zahnbogen 2 weitgehend angepaßt ist und den Zahnbogen vollständig umhüllt. Die Seitenfläche 3 des Rohlings 1 kann im Bereich der Zahnzwischenräume 4 Vertiefungen aufweisen, die der Form des Zahnzwischenraums entsprechen.

Fig. 1b zeigt Rohlinge, die einen halben Zahnbogen 6, mehrere Zähne 7 oder einen einzelnen Zahn 8 umfassen. Diese Segmente sind ebenfalls in Länge, Breite, Höhe und Krümmung dem zu ersetzenden Zahnbogen bzw. Zahn soweit wie möglich angepaßt und hüllen den Zahnbogen bzw. Zahn vollständig ein.

Fig. 2 zeigt den Rohling 7 in der Seitenansicht. Die Fläche 9 des Rohlings, aus der die Kaufläche des zu ersetzenden Zahns herausgearbeitet werden soll, ist an den Stellen, an denen sich Zahnzwischenräume befinden, mit Vertiefungen 10, die der Form des Zahnzwischenraums entsprechen, versehen. Das Formteil wird zur Kieferseite hin durch eine Planfläche 11 abgeschlossen.

Der besondere Vorteil der Erfindung besteht darin, daß die nach dem vorliegenden Verfahren hergestellten Rohlinge in ihrer Form dem herzustellenden Zahnersatzteil bereits weitgehend entsprechen. Der erforderliche Materialabtrag bei der anschließenden spanenden oder elektroerosiven Bearbeitung wird dadurch auf ein Minimum reduziert. Da somit der Materialverlust verringert und die Fertigungszeit verkürzt wird, kann das Zahnersatzteil kostengünstiger hergestellt werden.

Die Vielzahl der individuellen Formen des menschlichen Zahnbogens kann nach bestimmten Kriterien in verschiedene Klassen unterteilt werden. Durch das erfindungsgemäße Verfahren ist es möglich, ein ganzes Sortiment von Rohlingen für ganze Zahnbögen, Brücken und Kronen entsprechend dieser Klassifizierung herzustellen. Bei der Herstellung von Zahnersatzteilen durch abtragende Verfahren kann dann aus einem solchen Sortiment immer genau der Rohling ausgewählt werden, der den geringsten Materialabtrag bis zur gewünschten Endform des herzustellenden Zahnersatzteils erfordert. Es ist ein wesentlicher Vorteil der Erfindung, daß dadurch die aufwendige Einzelanfertigung eines individuellen Rohlings entfällt. Durch die Standardisierung der Rohlinge zur Herstellung von Zahnersatzteilen durch abtragende Verfahren können die Kosten der Herstellung von Zahnersatz wesentlich gesenkt werden.

Nach dem erfindungsgemäßen Verfahren können Zahnersatzteile z.B. wie folgt hergestellt werden :

Von einer Stange aus hochkorrosionsbeständiger Kobalt-Chrom-Knetlegierung (z.B. ENDOCAST SL(R) mit 63,5 Gew.-% Kobalt, 28,5 Gew.-% Chrom und 6 Gew.-% Molybdän) mit Rundquerschnitt 18 mm wird ein Stangenabschnitt passender Länge abgeschnitten. Der Stangenabschnitt wird auf eine Temperatur von ca. 1200°C erwärmt und in einem Biegewerkzeug entsprechend der Krümmung des anzufertigenden Zahnersatzteiles gebogen. Die gekrümmte Stange wird nochmals erwärmt und in einem horizontal geteilten Schmiedewerkzeug so umgeformt, daß ihre äußere Gestalt dem zu ersetzenden Zahnbogensegment weitgehend entspricht. Beim Schmieden der Stange wird Material aus der horizontalen Werkzeugteilung herausgedrängt und bildet einen umlaufenden gratähnlichen Ansatz. Dieser Grat wird so abgetrennt, daß die verbleibenden Gratansätze genau in die Werkstückaufnahmevorrichtung für die nachfolgende spanende oder elektroerosive Bearbeitung hineinpassen. Nach dem Abtrennen der Grate wird der Rohling weichgeglüht und entzundert, und dann in die Werkstückaufnahmevorrichtung eingespannt. Durch spanende oder elektroerosive Bearbeitung wird aus dem vorgeformten Rohling das fertige Zahnersatzteil hergestellt.

Nach einer anderen Verfahrensvariante wird der Rohling aus dünnen Stangenabschnitten (z.B. 15 mm rund, Material ENDOCAST SL(R)) hergestellt. Von der Stange wird ein Stück passender Länge abgetrennt und der Stangenabschnitt auf eine Temperatur von 1200°C erwärmt. Der Stangenabschnitt wird in einem Biegewerkzeug so gebogen, daß seine Krümmung der des anzufertigen Zahnersatzteils entspricht. Anschließend wird der gekrümmte Stangenabschnitt erneut aufgeheizt, und durch Heißprägen so verformt, daß er in Breite, Höhe und eventuell Oberflächengestalt dem herzustellenden Zahnersatzteil weitgehend angepaßt ist. Um den Rohling in eine Werkstückaufnahmevorrichtung einspannen zu können, werden durch Widerstandsbolzenschweißen Stifte aus gleichem Werkstoff an den Stellen des Rohlings angeschweißt, die durch die Werkstückaufnahmevorrichtung vorgegeben sind. Anschließend wird der Rohling weichgeglüht und entzundert und dann in die Werkstoffaufnahmevorrichtung eingespannt. Durch spanende oder elektroerosive Bearbeitung wird aus dem vorgeformten Rohling das fertige Zahnersatzteil hergestellt.

## Patentansprüche

1. Verfahren zur Herstellung von Zahnersatz und/oder Zahnersatzteilen, nämlich Zahnbögen (2), Brücken (6, 7) oder Kronen (8) aus einem Rohling (1), dessen Form dem zu fertigenden Zahnbogen (2) der Brücke (6, 7) oder der Krone (8) weitgehend endabmessungsnah entspricht und der mit einem Fixieransatz versehen wird, worüber er in eine Aufnahmevorrichtung eingespannt und spanend oder elektroerosiv bearbeitet wird, **dadurch gekennzeichnet**, daß aus einem Stangen-Vollmaterial Abschnitte passender Länge abgeschnitten, diese Stangenabschnitte durch Biegen und/oder Heißprägen und/oder Schmieden in dem zu fertigenden Zahnersatz-(teil) hinsichtlich Krümmung und Breite, Höhe und Oberflächengestalt weitgehend angepaßte Rohlinge geformt werden, wobei entweder beim Schmieden ein als Hilfsvorrichtung dienender gratähnlicher Fixieransatz erzeugt wird oder anschließend an das Formen Stifte oder Stege als Hilfsvorrichtung angeschweißt werden, bevor der so hergestellte Rohling über den Fixieransatz oder die Stifte oder Stege in eine Aufnahmevorrichtung eingespannt und spanend oder elektroerosiv endbearbeitet wird.

2. Verfahren nach Anspruch 1, dadurch gekennzeichnet, daß das Stangen-Vollmaterial aus hochkorrosionsbeständigem Material besteht.

3. Verfahren nach Anspruch 2, dadurch gekennzeichnet, daß zur Herstellung des Rohlings (1) hochkorrosionsbeständige Knetlegierungen verwendet werden.

4. Verfahren nach einem der Ansprüche 1 bis 3, dadurch gekennzeichnet, daß an dem Rohling (1) die Stifte oder Stege angeschweißt werden, insbesondere durch Widerstandsbolzenschweißen.

5. Verfahren nach einem der Ansprüche 1 bis 4, dadurch gekennzeichnet, daß die Stangen-Vollmaterialabschnitte vor dem Biegen auf 1200°C erwärmt werden.

6. Verfahren nach einem der Ansprüche 1 bis 5, dadurch gekennzeichnet, daß der Rohling (1) nach dem Biegen erneut aufgeheizt wird, bevor er weiter geschmiedet wird.

7. Verfahren nach einem der Ansprüche 1 bis 6, dadurch gekennzeichnet, daß der Rohling nach dem Anschweißen der Stifte oder Stege weichgeglüht und entzundert wird.

## Claims

1. A process for the production of a tooth replacement and/or tooth replacement parts, namely dental arches (2), bridges (6, 7) or crowns (8) from a blank (1) whose shape corresponds with substantially the final dimensions to the finished dental arch (2) of the bridge (6, 7) or crown (8) and which is furnished with a fixing attachment via which it is clamped in a receiving device and processed by machining or electrical erosion, characterized in that portions of suitable length are cut from solid rod material and the rods are shaped by bending and/or hot embossing and/or forging into blanks substantially adapted in curvature, width, height and surface configuration to the tooth replacement or replacement part to be produced, and either a burr-like fixing attachment acting as an ancillary device is produced during forging, or pins or webs are welded on as an ancillary device following moulding, whereafter the resulting blank is clamped via the fixing attachment or the pins or webs into a receiving device and is finally processed by machining or electrical erosion.

2. A process according to claim 1, characterized in that the solid rod material consists of highly corrosion- resistant material.

3. A process according to claim 2, characterized in that highly corrosion-resistant foregeable alloys are used for making the blank (1).

4. A process according to one of claims 1 to 3, characterized in that the pins or webs are welded onto the blank (1), more particularly by resistance stud welding.

5. A process according to one of claims 1 to 4, characterized in that prior to bending the portions of solid rod material are heated to 1200°C.

6. A process according to one of claims 1 to 5, characterized in that after bending the blank (1) is reheated before it is further forged.

7. A process according to one of claims 1 to 6, characterized in that after the pins or webs have been welded on, the blank is soft annealed and descaled.

## Revendications

1. Procédé de fabrication de prothèses dentaires et/ou d'éléments de prothèses dentaires, à savoir d'implantations dentaires (2), de "bridges" (6, 7) ou de couronnes (8) à partir d'une ébauche dont la forme correspond dans une large mesure du point de vue des dimensions à l'implantation dentaire (2) aux "bridges" (6, 7) ou à la couronne (8), à confectionner ; l'ébauche est prévue avec une saillie de fixation, par l'intermédiaire de laquelle la prothèse est encastrée dans un dispositif de fixation, et l'ébauche est façonnée par enlèvement de copeaux ou par électro-érosion ; le procédé est caractérisé en ce que, des morceaux de longueur adaptée sont découpés dans un matériau plein en forme de cylindre, ces morceaux cylindriques sont façonnés par cintrage et/ou estampage à chaud et/ou forgeage en (élément de) prothèse dentaire à confectionner du point de vue de la courbure et de la largeur, de la hauteur et de l'aspect superficiel ; et, ou bien une saillie de fixation semblable à une arête, servant de dispositif auxiliaire, est obtenue par forgeage, ou bien des broches ou des traverses sont soudées aussitôt après au niveau du modelage en tant que dispositif auxiliaire, avant que l'ébauche ainsi constituée ne soit encastrée par l'intermédiaire de la saillie de fixation ou des broches et des traverses dans un dispositif de fixation, et soit façonnée, de façon définitive, par enlèvement de copeaux ou par électro-érosion.

2. Procédé selon la revendication 1, caractérisé en ce que le matériau plein de forme cylindrique est constitué d'un matériau de grande stabilité vis à vis de la corrosion.

3. Procédé selon la revendication 2, caractérisé en ce qu'on utilise pour la fabrication de l'ébauche (1) des alliages corroyés de grande stabilité vis à vis de la corrosion.

4. Procédé selon l'une quelconque des revendications 1 à 3, caractérisé en ce que les broches ou les traverses sont soudées sur l'ébauche (1), en particulier par soudage de goujon par résistance.

5. Procédé selon l'une quelconque des revendications 1 à 4 caractérisé en ce que l'on chauffe jusqu'à 1200°C les tronçons de matériau plein de forme cylindrique, avant de les cintrer.

6. Procédé selon l'une quelconque des revendications 1 à 5 caractérisé en ce que l'on chauffe à nouveau l'ébauche (1) après le cintrage, avant qu'on ne la forge à nouveau.

7. Procédé selon l'une quelconque des revendications 1 à 6, caractérisé en ce que l'ébauche, après la soudure des broches et des traverses, est soumise à un recuit et est décalaminée.

5

## FIG.1a

## FIG.1b

FIG.2